# EUROPÄISCHE PATENTANMELDUNG

(11) **EP 1 153 829 A2**
(43) Veröffentlichungstag der Anmeldung: **14.11.2001**
(21) Anmeldenummer: 01110921.2
(22) Anmeldetag: 05.05.2001
(51) Int. Cl.: B64C 27/00, B64C 27/605

(54) **Einzelblatt-Steuerungsvorrichtung für einen Hubschrauber-Hauptrotor**

(30) Priorität: 10.05.2000 DE 10022732
(71) Anmelder: ZF Luftfahrttechnik GmbH, 34379 Calden (DE)
(72) Erfinder: Fischer, Willy Gerd, 34292 Ahnatal (DE); Kunze, Oliver, 34121 Kassel (DE)
(74) Vertreter: Zietlow, Karl-Peter

(57) **Zusammenfassung**

Die Erfindung betrifft eine Einzelblatt-Steuerungsvorrichtung für einen Hubschrauber-Hauptrotor mit einem von einem Hauptgetriebe drehantreibbaren Rotormast (2), mit einer aus einem nichtdrehenden Teil (16) und einem bei Betrieb drehenden Teil (18) bestehenden Taumelscheibe (12), die zur Übertragung von Steuerbewegungen von einem nichtdrehenden System in ein drehendes System dient, welche gegenüber dem Rotormast (2) kippbar und axial verschiebbar gelagert ist, und die von am nichtdrehenden Teil (16) angelenkten Steuerelementen (20) im nichtdrehenden System betätigbar ist und mit mehreren, gleichmäßig am Umfang einer Rotornabe (2) angeordneten Rotorblättern (6), von denen jedes einen Einstellwinkel-Steuerhebel (8) aufweist, der mit dem drehenden Teil (18) der Taumelscheibe (12) in Verbindung steht, wobei im drehenden System jedem Rotorblatt (6) ein individueller Aktuator (22) zugeordnet ist, dessen Steuerbewegungen den Steuerbewegungen der Taumelscheibe überlagert sind.
Erfindungsgemäß wird vorgeschlagen, daß jeder Aktuator (22) im wesentlichen in einem Hohlraum (24) innerhalb des drehbaren Teils der Taumelscheibe (12) angeordnet ist, und daß der Hohlraum mindestens eine Öffnung (26) aufweist, durch welche ein aktuatorseitiges Übertragungsglied (38) geführt ist.

## Beschreibung

Die Erfindung betrifft eine Einzelblatt-Steuerungsvorrichtung für einen Hubschrauber-Hauptrotor nach dem Oberbegriff des Hauptanspruchs.

Übliche Steuerungsvorrichtungen für Hubschrauber-Hauptrotoren weisen eine Taumelscheibe zur Übertragung von Steuerbewegungen des Piloten vom nichtdrehenden System der Hubschrauber-Zelle ins während des Betriebs drehende System des Hauptrotors auf. Die Taumelscheibe ist gegenüber dem Rotormast zur zyklischen Rotorblatt-Verstellung in alle Richtungen kippbar und zur kollektiven Rotorblatt-Verstellung axial verschiebbar gelagert. Die Taumelscheibe wird von mindestens drei, unterhalb der Taumelscheibe angeordneten Stellgliedern bzw. Steuerstangen betätigt. Ein niedrigeres Vibrationsniveau, bessere Flugleistungen und eine geringere Geräuschemission können erzielt werden, indem der kollektiven und sinusförmigen, monozyklischen Einstellwinkel-Verstellung individuell höherfrequente Einstellwinkel-Änderungen überlagert werden, um beispielsweise Rotorblattinduzierten Schwingungen entgegenzuwirken.

Die DE 198 41 853 A1 zeigt eine derartige Steuerungsvorrichtung, bei der im drehenden System des Hauptrotors jedem Rotorblatt ein individueller Aktuator zugeordnet ist, dessen Steuerbewegungen der Steuerbewegung der Taumelscheibe überlagert sind. Bei dieser bekannten Einzelblatt-Steuerungsvorrichtung sind die Aktuatoren anstelle von Steuerstangen zwischen dem drehenden Teil der Taumelscheibe und Anschlüssen am Blatthorn jedes Rotorblatts eingebaut. Bei dieser Steuerungsvorrichtung sind die Aktuatoren nicht gegen äußere Umwelteinflüsse geschützt. Auch die elektrischen und hydraulischen Zuleitungen zu den Aktuatoren sind ungeschützt und erfahren im Betrieb aerodynamische Kräfte, welche die Leitungen und Anschlüsse belasten. Ferner sind die Aktuatoren relativ weit von der Rotorachse entfernt und erfahren daher erhebliche Zentripetalkräfte. Diese Kräfte wirken quer zur Stellrichtung der Aktuatoren, so daß zur Aufnahme dieser Kräfte die Aktuatoren entsprechend dimensionierte Führungen aufweisen müssen.

Der vorliegenden Erfindung liegt daher die Aufgabe zugrunde, eine einfachere Einzelblatt-Steuerungsvorrichtung zu schaffen, bei der die Aktuatoren und deren Zuleitungen besser vor Umwelteinflüssen geschützt sind. Außerdem soll die Steuerungsvorrichtung kompakt sein und der Einfluß von Zentripetalkräften auf die Aktuatoren soll verringert werden.

Ausgehend von einer Einzelblatt-Steuerungsvorrichtung nach dem Oberbegriff des Hauptanspruchs wird diese Aufgabe dadurch gelöst, daß jeder Aktuator im wesentlichen in einem Hohlraum innerhalb des drehbaren Teils der Taumelscheibe angeordnet ist, und daß der Hohlraum mindestens eine Öffnung aufweist, durch welche ein aktuatorseitiges Übertragungsglied geführt ist. In dem Hohlraum sind die Aktuatoren und deren Zuleitungen sehr gut vor äußeren Einflüssen geschützt. Der Hohlraum kann dabei zwischen zwei Teilen des drehbaren Teils der Taumelscheibe gebildet werden. Er kann aber auch eine Öffnung aufweisen, die so groß ist, daß ein Aktuator zur Montage eingebracht werden kann. In jedem Fall weist der Hohlraum mindestens eine Öffnung für ein aktuatorseitiges Übertragungsglied auf. Dieses Glied kann ein Teil des Aktuators oder mit diesem verbunden sein.

In einer vorteilhaften Ausgestaltung der Erfindung ist an dem drehenden Teil der Taumelscheibe im Bereich der Öffnung für jeden Aktuator ein Überlagerungshebel schwenkbar gelagert, an dem sowohl das aktuatorseitige Übertragungsglied als auch ein Ende einer Steuerstange angelenkt ist, deren anderes Ende mit dem Einstellwinkel-Steuerhebel eines Rotorblatts verbunden ist. Durch Wahl der Hebelverhältnisse des Überlagerungshebels kann die Kraft-/Hubcharakteristik der Aktuatoren in gewissen Grenzen gewandelt werden. Ist der Überlagerungshebel als Umlenkhebel ausgebildet, ergeben sich mehrere Möglichkeiten der Ausrichtung der Aktuatoren innerhalb der Taumelscheibe. Besonders vorteilhaft ist, wenn die Aktuatoren Linear-Aktuatoren sind, die bezüglich einer Mittelachse der Taumelscheibe radial ausgerichtet sind. Bei dieser Ausgestaltung der Erfindung wirken die Zentripetalkräfte auf die Aktuatoren in deren Stellrichtung, wo sie im Verhältnis zu den Stellkräften klein sind. Ein Ende jedes Aktuators ist dabei relativ nahe am Drehzentrum, so daß auch der Betrag der auf die Aktuatoren wirkenden Zentripetalkräfte aufgrund des geringeren Radius geringer ist.

Die Aktuatoren können hydraulische oder elektrische Aktuatoren sein, wobei elektrische Aktuatoren, die je nachdem, ob sie mechanisch Leistung abgeben oder aufnehmen, als Motor oder als Generator wirken und dabei elektrische Leistungen von einer Leistungsversorgungseinrichtung aufnehmen oder an diese zurückspeisen, in vorteilhafter Weise verwendet werden können, wenn die Aktuatoren derart miteinander gekoppelt sind, daß ein gegenseitiger Leistungsausgleich stattfinden kann. Bei dieser Ausgestaltung der Erfindung ist die Wärmeentwicklung im System kleiner, da weniger Energie dissipiert zu werden braucht. Außerdem ist der Leistungsbedarf der Gesamtanlage geringer, so daß auch eine kleinere und leichtere Leistungsversorgungseinrichtung ausreichend ist.

Zur Leistungsversorgung der Aktuatoren von einer Leistungsversorgungseinrichtung, die im nichtdrehenden System der Hubschrauber-Zelle angeordnet ist, kann ein Drehtransformator mit einem Primär- und einem Sekundärglied vorgesehen sein, wobei ein Glied des Drehtransformators dem nichtdrehenden System und das andere Glied dem drehenden System des Hubschrauber-Hauptrotors zugeordnet ist. Elektrische Leistung für die Versorgung der Aktuatoren kann durch einen mechanisch-elektrischen Leistungswandler - einen Generator - bereitgestellt werden, welcher mechanische Leistung zwischen einem ersten Teil, welcher dem nichtdrehenden System zugeordnet ist, und einem zweiten Teil, welcher dem drehenden System zugeordnet ist, aufnimmt. Ein solcher Generator greift also mechanische Leistung am Rotormast ab und die elektrische Leistung wird ohne weitere Drehdurchführungen im drehenden System bereitgestellt.

Ein hoher Integrationsgrad des Systems ist dadurch erreichbar, daß ein Glied des Drehtransformators oder ein Teil des mechanisch-elektrischen Wandlers im drehenden Teil der Taumelscheibe und das andere Glied des Drehtransformators oder der andere Teil des mechanisch-elektrischen Wandlers im nichtdrehenden Teil angeordnet ist.

Die Verkoppelung der Aktuatoren zum gegenseitigen Leistungsausgleich sowie die Verwendung und Anordnung eines Drehtransformators oder eines mechanisch-elektrischen Leistungswandlers ist unabhängig von der Einbausituation der Aktuatoren möglich.

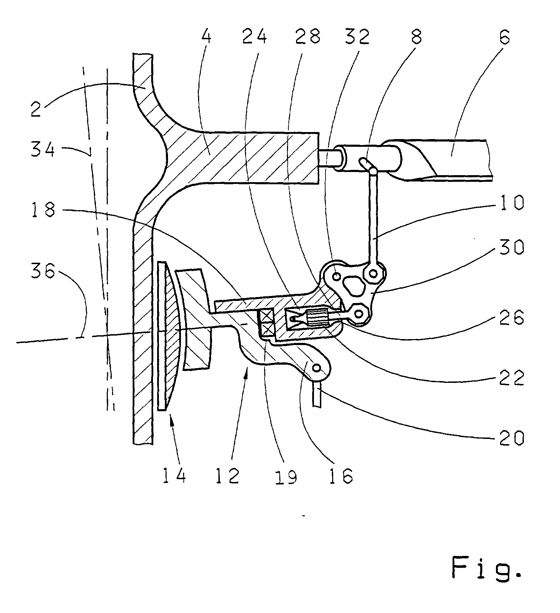

Die Erfindung wird anhand der beiliegenden Figur erläutert, die schematisch eine erfindungsgemäße Einzelblatt-Steuerungsvorrichtung zeigt. Darin ist mit 2 ein Rotormast bezeichnet, der von einem nicht dargestellten Hauptgetriebe drehantreibbar ist. Am Umfang der Rotornabe 4 sind mehrere Rotorblätter 6, von denen nur eines gezeigt ist, gleichmäßig verteilt angeordnet. Jedes Rotorblatt 6 ist um seine Längsachse schwenkbar an der Rotornabe 4 befestigt und weist einen Einstellwinkel-Steuerhebel 8 auf, an dem eine Steuerstange 10 angelenkt ist. Zur kollektiven und zyklischen Rotorblatt-Verstellung ist eine Taumelscheibe 12 vorgesehen, die durch ein Lager 14 nach allen Seiten kippbar und axial verschiebbar am Rotormast 2 angebracht ist. Sie weist einen nichtdrehenden Teil 16 und einen drehenden Teil 18 auf. Zwischen dem nichtdrehenden Teil 16 und dem drehenden Teil 18 sind Lager 19 angeordnet. Die axiale Position und die Neigung der Taumelscheibe 12 wird durch Steuerstangen 20 bestimmt, die am nichtdrehenden Teil 16 der Taumelscheibe 12 angelenkt sind. Die Darstellung zeigt eine geneigte Position der Taumelscheibe 12. Die Steuerstangen 20 sind betätigbar von einem nicht gezeigten Steuerungsmechanismus, der dem nichtdrehenden System der Hubschrauber-Zelle zugeordnet ist. Aktuatoren 22 erzeugen Hubbewegungen, die den Steuerbewegungen der Taumelscheibe 12 überlagert werden. Hierdurch wird der kollektiven und zyklischen Rotorblatt-Ver-stellung für jedes Rotorblatt 6 individuell eine zusätzliche Steuerbewegung überlagert, die sich positiv auf das Geräuschverhalten und auf die Flugleistungen des Hubschraubers auswirkt.

Erfindungsgemäß ist jeder Aktuator 22 im wesentlichen in einem Hohlraum 24 innerhalb des drehbaren Teils 18 der Taumelscheibe angeordnet, wobei der Hohlraum 24 eine Öffnung 26 aufweist, durch die ein aktuatorseitiges Übertragungsglied 28 geführt ist. Ein Ende des Aktuators 22 ist im Hohlraum 24 an dem drehenden Teil 18 der Taumelscheibe 12 befestigt, während ein anderer Teil 28, der eine Hubbewegung ausführen kann, durch die Öffnung 26 hindurch aus dem Hohlraum ragt. Dieses aktuatorseitige Übertragungsglied 28 ist an einem Umlenkhebel 30 angelenkt, der oberhalb der Öffnung 26 am drehbaren Teil 18 der Taumelscheibe 12 schwenkbar gelagert ist. Die Schwenkachse 32 des Umlenkhebels 30 verläuft dabei senkrecht zu der Mittelachse 34 der Taumelscheibe und senkrecht zu einer radial von dieser Mittelachse 34 nach außen weisenden Linie 36. Die Aktuatoren 22 sind Linear-Aktuatoren und bezüglich der Mittelachse 34 der Taumelscheibe 12 radial ausgerichtet, so daß ihre Hubbewegung entlang der Linie 36 erfolgt. Diese Hubbewegung wird durch den Umlenkhebel 30 in eine vertikale Hubbewegung der Steuerstangen 10, die ebenfalls am Umlenkhebel 30 angelenkt sind, umgeformt.

### Bezugszeichen

- 2: Rotormast
- 4: Rotornabe
- 6: Rotorblatt
- 8: Einstellwinkel-Steuerhebel
- 10: Steuerstange
- 12: Taumelscheibe
- 14: Lager
- 16: nichtdrehender Teil der Taumelscheibe
- 18: drehender Teil der Taumelscheibe
- 19: Lager
- 20: Steuerstangen
- 22: Aktuator
- 24: Hohlraum
- 26: Öffnung
- 28: Übertragungsglied
- 30: Umlenkhebel
- 32: Achse
- 34: Achse
- 36: Linie

## Patentansprüche

1. Einzelblatt-Steuerungsvorrichtung für einen Hubschrauber-Hauptrotor mit einem von einem Hauptgetriebe drehantreibbaren Rotormast (2), mit einer aus einem nichtdrehenden Teil (16) und einem bei Betrieb drehenden Teil (18) bestehenden Taumelscheibe (12), die zur Übertragung von Steuerbewegungen von einem nichtdrehenden System in ein drehendes System dient, welche gegenüber dem Rotormast (2) in allen Richtungen kippbar und axial verschiebbar gelagert ist, und die von am nichtdrehenden Teil (16) angelenkten Steuerelementen (20) im nichtdrehenden System betätigbar ist und mit mehreren gleichmäßig am Umfang einer Rotornabe (4) angeordneten Rotorblättern (6), von denen jedes einen Einstellwinkel-Steuerhebel (8) aufweist, der mit dem drehenden Teil (18) der Taumelscheibe in Verbindung steht, wobei im drehenden System jedem Rotorblatt (6) ein individueller Aktuator (22) zugeordnet ist, dessen Steuerbewegungen den Steuerbewegungen der Taumelscheibe (12) überlagert sind, **dadurch gekennzeichnet, daß** jeder Aktuator (22) im wesentlichen in einem Hohlraum (24) innerhalb des drehbaren Teils (18) der Taumelscheibe (12) angeordnet ist, und daß der Hohlraum (24) mindestens eine Öffnung (26) aufweist, durch welche ein aktuatorseitiges Übertragungsglied (28) geführt ist.

2. Steuerungsvorrichtung nach Anspruch 1, **dadurch gekennzeichnet, daß** an dem drehenden Teil (18) der Taumelscheibe (12) im Bereich der Öffnung (26) für jedes Rotorblatt (6) ein Überlagerungshebel (30) schwenkbar gelagert ist, an welchem das aktuatorseitige Übertragungsglied (28) und ein Ende einer Steuerstange (10) angelenkt sind, deren anderes Ende mit dem Einstellwinkel-Steuerhebel (8) des Rotorblatts verbunden ist.

3. Steuerungsvorrichtung nach Anspruch 1 oder 2, **dadurch gekennzeichnet, daß** die Aktuatoren (22) Linear-Aktuatoren sind, die bezüglich einer Mittelachse (34) der Taumelscheibe (12) radial ausgerichtet sind.

4. Steuerungsvorrichtung nach mindestens einem der Ansprüche 1 bis 3, **dadurch gekennzeichnet, daß** die Aktuatoren (22) elektrische Aktuatoren sind, die, je nachdem, ob sie mechanische Leistung abgeben oder aufnehmen, als Motor oder als Generator wirken und dabei elektrische Leistung von einer Leistungsversorgungseinrichtung aufnehmen oder an diese zurückspeisen, und daß die Aktuatoren derart miteinander gekoppelt sind, daß ein gegenseitiger Leistungsausgleich stattfinden kann.

5. Steuerungsvorrichtung nach mindestens einem der Ansprüche 1 bis 4, **dadurch gekennzeichnet, daß** zur Leistungsversorgung der Aktuatoren (22) ein Drehtransformator mit einem Primär- und einem Sekundärglied vorgesehen ist, wobei ein Glied des Drehtransformators dem nichtdrehenden System und das andere Glied dem drehenden System des Hubschrauber-Hauptrotors zugeordnet ist.

6. Steuerungsvorrichtung nach mindestens einem der Ansprüche 1 bis 4, **dadurch gekennzeichnet, daß** zur Leistungsversorgung der Aktuatoren (22) ein mechanisch-elektrischer Leistungswandler vorgesehen ist, der mechanische Leistung zwischen einem ersten Teil, welcher dem nichtdrehenden System zugeordnet ist, und einem zweiten Teil, welcher dem drehenden System zugeordnet ist, aufnimmt.

7. Steuerungsvorrichtung nach Anspruch 5 oder 6, **dadurch gekennzeichnet, daß** ein Glied des Drehtransformators oder ein Teil des mechanisch-elektrischen Wandlers im drehenden Teil (18) der Taumelscheibe (12) angeordnet ist, und das andere Glied des Drehtransformators oder der andere Teil des mechanisch-elektrischen Wandlers im nichtdrehenden Teil (16) angeordnet ist.
